# EUROPÄISCHE PATENTSCHRIFT

(11) **EP 1 060 712 B1**
(45) Veröffentlichungstag und Bekanntmachung des Hinweises auf die Patenterteilung: **24.05.2006**
(21) Anmeldenummer: 00112669.7
(22) Anmeldetag: 15.06.2000
(51) Int. Cl.: A61C 13/00

(54) **Vorrichtung und Verfahren zur Erstellung von zahnmedizinischen Passkörpern**
Device and method for manufacturing dental prosthesis
Dispositif et procédé de fabrication de prothèses dentaires

(30) Priorität: 18.06.1999 DE 19928002
(43) Veröffentlichungstag der Anmeldung: 20.12.2000
(73) Patentinhaber: Sirona Dental Systems GmbH, 64625 Bensheim (DE)
(72) Erfinder: Basler, Franz, 69514 Laudenbach (DE); Hehn, Stefan, 64625 Bensheim (DE); Rothenberger, Bernd, 79206 Breisach (DE)
(74) Vertreter: Sommer, Peter

(56) Entgegenhaltungen:
- EP-A- 0 455 853
- EP-A- 0 455 854

## Beschreibung

Die Erfindung betrifft eine Vorrichtung und ein Verfahren zur Erstellung von medizinischen Paßkörpern, insbesondere von Zahnrestaurationen. Unter Zahnrestaurationen sollen hier sowohl aloplastische wie auch endo- und exoprothetische Paßkörper verstanden werden. Im zahnmedizinischen Bereich können dies Inlays, Onlays, Kronen, Brücken, Prothesen, Implantate oder Veneers sein.

In der EP 0 455 853 A1 ist eine Vorrichtung zur Erstellung medizinischer, insbesondere zahnmedizinischer Prothetik-Paßkörper, bekannt, die eine Aufnahmevorrichtung für ein Werkstück, aus dem der Paßkörper erstellt wird, aufweist. Die Aufnahmevorrichtung ist mit einer Werkstückspindel verbunden, die so ausgebildet ist, daß das Werkstück um eine Vorschubachse in axialer Richtung verstellt werden kann. Zur Bearbeitung des Werkstücks ist eine erste Werkzeugspindel mit mindestens einem in Rotation versetzbaren Bearbeitungswerkzeug vorgesehen, wobei die Werkzeugspindel so angeordnet und gelagert ist, daß das von ihr aufgenommene zumindest eine Werkzeug senkrecht zur Vorschubachse der Werkstückspindel zum Werkstück hin und von diesem weg bewegbar ist. Weiterhin ist eine zweite Werkzeugspindel vorgesehen, die bezüglich der Bewegung relativ zum Werkstück in gleicher Weise wie die erste Werkzeugspindel angeordnet und gelagert wird, jedoch gegenüber dieser vorzugsweise um 180° versetzt angeordnet und getrennt von dieser angetrieben ist. Darüber hinaus sind Steuermittel vorgesehen, welche die Antriebe der Werkzeugaufnahmevorrichtung und der Werkzeugspindel im Sinne einer simultanen Bearbeitung des Werkstücks entsprechend vorgegebener Konturendaten steuern.

Durch die zwei getrennt angeordneten und auch getrennt angetriebenen Spindeln für in Rotation versetzbare Arbeitswerkzeuge ist es möglich, deren Bewegung zusammen mit der Bewegung des Werkstücks simultan zu steuern und den herzustellenden Paßkörper praktisch gleichzeitig mit zwei Werkzeugen zu bearbeiten, wodurch sich die Arbeitszeit zur Herstellung eines Paßkörpers wesentlich kürzen läßt.

Dabei können die einander gegenüberliegenden Spindeln in einer Ebene angeordnet werden, wobei wahlweise eine waagrechte Anordnung der Spindeln oder eine Anordnung der Spindeln senkrecht zu der vorgenannten Ebene oder in einem anderen Winkel dazu möglich ist.

Die simultane Bearbeitung erfolgt so, daß mit einer Schleifscheibe, die von der einen Werkzeugspindel angetrieben wird, die äußeren Umrisse der Krone herausgearbeitet werden und daß ein Fingerfräser praktisch der Schleifscheibe nachläuft. Mit dem Fingerfräser erfolgt ein Nachbearbeiten oder Glätten der Oberfläche und das Ausarbeiten der Fissuren, die, bedingt durch den großen Radius der Schleifscheibe, von dieser nicht ausgearbeitet werden können.

Die Aufgabe der Erfindung besteht darin, eine Werkzeugkombination und ein Verfahren herauszufinden, mit dem die Formen, die bei medizinischen Paßkörpern, insbesondere bei typischen Zahnrestaurationen vorliegen, besonders schnell und genau hergestellt werden können. Dabei ist zu beachten, daß die Paßkörper nicht durch die Bearbeitungskräfte zerstört werden. Auch ist es erforderlich, daß die Werkzeuge einen einfachen Aufbau der Werkzeugmaschine erlauben. Schließlich soll mit den Werkzeugen eine leistungsfähige Lastregelung ermöglicht werden.

Diese Aufgabe wird durch die Merkmale des Anspruchs 1 gelöst. Gemäß der Erfindung sind die Bearbeitungswerkzeuge als in Rotation versetzbare Stifte mit radialen und stirnseitigen Arbeitsflächen ausgebildet. Die Bearbeitungswerkzeuge sind während der Bearbeitung des Werkstücks in etwa auf gleicher Höhe bezüglich der Vorschubachse des Werkstücks angeordnet, so daß sie entlang eng zusammenliegender Bearbeitungsflächen arbeiten.

Dadurch, daß die Bearbeitungswerkzeuge in etwa auf gleicher Höhe arbeiten, wird verhindert, daß die Bearbeitungskräfte den Paßkörper zerstören. Durch die Bearbeitung des Werkstücks auf in etwa gleicher Höhe wird zudem die Bearbeitungszeit kurz gehalten. Durch die Verwendung von in Rotation versetzbaren Stiften mit radialen und stirnseitigen Arbeitsflächen lassen sich in einem einzigen Arbeitsgang die endgültigen Geometrien erzeugen. Ein zweiter Durchgang ist nicht erforderlich.

Vorteilhafterweise ist das Werkstück in axialer Richtung zustellbar, so daß die Bearbeitungswerkzeuge in axialer Richtung nicht verstellt werden müssen. Hierdurch wird ein einfacher Aufbau der Werkzeugmaschine möglich.

Um Höhen- und Tiefenunterschiede im Paßkörper herzustellen, ist es von Vorteil, wenn die Bearbeitungswerkzeuge entlang einer ersten Bearbeitungsrichtung senkrecht zur Vorschubachse des Werkstücks zum Werkstück hin und von diesem weg bewegbar sind.

Um darüber hinaus eine Umfangskontur zu erzeugen, ist es vorteilhaft, wenn die Bearbeitungswerkzeuge entlang einer zweiten Bearbeitungsrichtung im wesentlichen senkrecht zur Vorschubachse des Werkstücks und im wesentlichen senkrecht zur ersten Bearbeitungsrichtung am Werkstück entlang bewegbar sind.

Zur Verwirklichung einer leistungsfähigen Lastregelung ist es vorteilhaft, wenn das erste und das zweite Bearbeitungswerkzeug getrennt angetrieben sind.

Um die Koordinierung der beiden Bearbeitungswerkzeuge zu ermöglichen, ist es vorteilhaft, wenn Steuermittel vorgesehen sind, welche die Bewegung der Bearbeitungswerkzeuge im Sinne einer simultanen Bearbeitung des Werkstücks entsprechend vorgegebener Konturendaten steuern.

Vorteilhafterweise liegen die Bearbeitungsflächen im wesentlichen senkrecht zur Vorschubachse, wodurch auf zusätzlich Verstellantriebe für die Bearbeitungswerkzeuge verzichtet werden kann, da der Vorschub des Werkstücks ausreichend ist und auf ein Zustellen der Bearbeitungswerkzeuge in Richtung der Vorschubachse verzichtet werden kann. Dies bedeutet nicht, daß die Bearbeitungswerkzeuge sich nicht bewegen, die Bearbeitungswerkzeuge werden lediglich entsprechend einer vorgegebenen Bearbeitungsfläche, die bezogen auf die Vorrichtung stets dieselbe ist, bewegt.

Zur Vermeidung von Bearbeitungskräften ist es vorteilhaft, wenn die Bearbeitungsflächen höchstens einen Werkzeugdurchmesser auseinanderliegen.

Um eine genaue Ausrichtung des Werkstücks innerhalb der Vorrichtung zu ermöglichen, ist es vorteilhaft, wenn das Werkstück um die Vorschubachse drehbar ist. Weiterhin ist das Erstellen von Hinterschneidungen zumindest teilweise möglich.

Um die zweite Bearbeitungsrichtung zu ermöglichen, ist es vorteilhaft, wenn das erste und/oder das zweite Bearbeitungswerkzeug um eine parallel zu der Werkzeugachse angeordnete Drehachse verstellbar ist. Alternativ hierzu kann auch ein linearer Spindeltrieb vorgesehen sein, der jedoch konstruktiv aufwendiger ist.

Vorteilhafterweise sind die Bearbeitungswerkzeuge bezüglich der Drehachse so beabstandet, daß sich die Bearbeitungsflächen berühren und/oder zumindest teilweise überschneiden.

Dies kann beispielsweise dadurch erreicht werden, daß der Abstand der beiden Werkzeuge zu den jeweiligen Drehachsen gleich groß ist. Ist der Abstand unterschiedlich, so kann die Lage der Drehachse innerhalb der Vorrichtung so verändert werden, daß sich die Bearbeitungsflächen berühren und/oder zumindest teilweise überschneiden.

Zur Erzeugung einer typischen Zahnrestauration ist es vorteilhaft, wenn ein Bearbeitungswerkzeug ein Zylinderschleifer und das andere Bearbeitungswerkzeug ein Schleifstift mit sich zur Spitze hin verjüngender Form ist.

Mittels des Zylinderschleifers ist es möglich, die Innenkanten einer Restauration scharf darzustellen. Die Deckelseite der Restauration kann durch einen spitz zulaufenden Schleifstift erzeugt werden, wobei Fissuren gerade dann in guter Detailgenauigkeit wiedergegeben werden können, wenn der Schleifstift mit sich zur Spitze hin verjüngender Form einen Spitzenradius von 0,1 bis 0,5 mm und einen Kegelwinkel von 15° bis 55° aufweist. Dadurch sind auch die Steuerungseigenschaften beherrschbar.

Um eine Hinterschneidung des Paßkörpers zu erzeugen, ist es von Vorteil, daß mindestens ein Werkzeug so um eine Schwenkachse verschwenkbar ist, daß die erste Bearbeitungsrichtung des Werkzeugs in Bezug auf die Vorschubachse des Werkstücks in einem Winkel kleiner als 90° angeordnet ist.

Ein weiterer Gegenstand der Erfindung ist ein Verfahren zur Erstellung von medizinischen Paßkörpern, insbesondere von Zahnrestaurationen, unter Verwendung einer Bearbeitungsmaschine mit mindestens zwei gleichzeitig in Betrieb befindlichen Bearbeitungswerkzeugen, wobei das Werkstück während der Bearbeitung in axialer Richtung entlang einer Vorschubachse an den Werkzeugen vorbeigeführt wird. Gemäß der Erfindung sind die Bearbeitungswerkzeuge als in Rotation versetzbare Stifte mit radialen und stirnseitigen Arbeitsflächen ausgebildet, wodurch ein radialer und/oder stirnseitiger Materialabtrag erfolgt, und sind die Bearbeitungswerkzeuge in eng zusammenliegenden Bearbeitungsflächen am Werkstück geführt, wobei die Bearbeitungswerkzeuge folglich in etwa auf gleicher Höhe, bezogen auf die Vorschubachse, arbeiten.

Der Vorteil dieses Verfahrens besteht darin, daß die Paßkörper nicht durch Bearbeitungskräfte zerstört werden, wobei mit der besonderen Geometrie der Bearbeitungswerkzeuge eine zeitsparende Bearbeitung möglich ist.

Dadurch, daß das Werkstück während der Bearbeitung in axialer Richtung an den Werkzeugen entlang geführt wird und daß zumindest ein Werkzeug in einer ersten Bearbeitungsrichtung, die senkrecht zur Vorschubachse des Werkstücks ist, zum Werkstück hin und von diesem weg bewegt wird, lassen sich Höhen- und Tiefenprofile erstellen.

Vorteilhafterweise wird das Verfahren so durchgeführt, daß das Werkstück in axialer Richtung zugestellt wird, wobei das Werkstück zur Erzeugung von Hinterschneidungen um die Vorschubachse gedreht wird.

Um die Außenflächen der Paßkörper vollständig zu bearbeiten, ist es vorteilhaft, wenn die Bearbeitungswerkzeuge in die Bearbeitungsfläche des anderen Bearbeitungswerkzeugs eindringen können.

Um eine zeitoptimale Steuerung der Bearbeitungswerkzeuge zu ermöglichen, ist es vorteilhaft, wenn die Bearbeitungswerkzeuge in dem Bereich des Werkstücks, in dem der Paßkörper erzeugt wird, gegenläufig arbeiten. Damit die Bearbeitungswerkzeuge einander nicht berühren, ist eine Sicherheitssteuerung vorgesehen, die zum Ausweichen eines der beiden Bearbeitungswerkzeuge führt.

Zur Herstellung von Hinterschneidungen in der Oberfläche des Paßkörpers ist mindestens ein Bearbeitungswerkzeug so um eine Schwenkachse verschwenkbar, daß die erste Bearbeitungsrichtung des Werkzeugs in Bezug auf die Vorschubachse des Werkstücks in einem Winkel kleiner als 90° angeordnet ist.

Um Kollisionen der beiden Bearbeitungswerkzeuge zu vermeiden, wird die Bewegung der beiden Bearbeitungswerkzeuge am Ende jeder Bearbeitungsfläche synchronisiert, indem jedes Bearbeitungswerkzeug die für ihn bestimmte Bahn abfährt und das schnellere Bearbeitungswerkzeug auf das langsamere Bearbeitungswerkzeug wartet.

Zur Herstellung eines Paßkörpers, der in einen durch eine Äquatorlinie abgrenzbaren oberen Teil und einen unteren Teil aufteilbar ist, bearbeitet vorteilhafterweise das eine Bearbeitungswerkzeug den oberen Teil und das andere Bearbeitungswerkzeug das gegenüberliegende Unterteil des Paßkörpers.

Wenn man in einem Arbeitsgang alle wesentlichen Formen von Restaurationen in dieser Geometrie herstellen möchte, ist es vorteilhaft, für den unteren Teil einen Zylinderschleifer zu nehmen und zur Bearbeitung des oberen Teils ein Schleifstift mit sich zur Spitze hin verjüngender Form zu verwenden.

In der Zeichnung ist eine Schleifmaschine zur Herstellung von Zahnrestaurationen aus einem Keramikrohling dargestellt, anhand dessen die Erfindung verdeutlicht wird. Es zeigt die:
- Fig. 1: einen prinzipiellen Aufbau einer Schleifkammer einer Schleifmaschine, die
- Fig. 2: die Lage verschiedener Bearbeitungsflächen bezogen auf das zu bearbeitende Werkstück, die
- Fig. 3: eine Ansicht der Schleifkammer in Richtung von vorne auf das Werkstück, die
- Fig. 4: eine Sicht auf das Werkstück von vorne gemäß Fig. 3 in Vergrößerung unter Angabe der Schleifbahnen bzw. Bearbeitungsflächen, die
- Fig. 5: eine Sicht auf das Werkstück aus Fig. 3 von der linken Seite der Fig. 3 aus gesehen unter Weglassung der Werkzeugspindel des Zylinderfräsers, die
- Fig. 6: die Bearbeitungsflächen am Werkstück bei einem bereits teilweise hergestellten Passkörper und die
- Fig. 7: einen Verlauf der Bearbeitung an einem zum Teil bereits aus dem Werkstück herausgearbeitetem Passkörper.

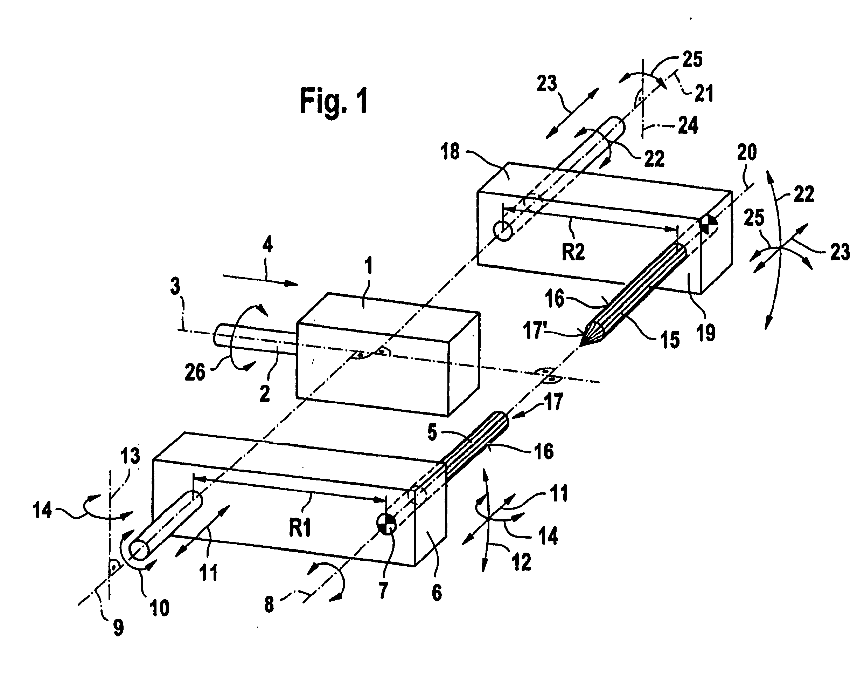

In Fig. 1 ist ein Teil eines Schleifraums einer erfindungsgemäßen Vorrichtung zur Erstellung von medizinischen Paßkörpern, insbesondere von Zahnrestaurationen, gezeigt. Ein Werkstück 1 ist über einen Halter 2 in einer nicht dargestellten Werkstückspindel eingespannt und mittels der Werkstückspindel in axialer Richtung entlang einer Vorschubachse 3 in Richtung des Pfeils 4 axial verschiebbar. Auf einer Seite der Vorschubachse 3 ist ein erstes Bearbeitungswerkzeug 5 angeordnet, welches in einer Werkzeugspindel 6 gelagert und mittels eines Motors 7 in Rotation versetzbar ist. Das Bearbeitungswerkzeug 5 ist als Zylinderschleifer ausgebildet. Die Rotation des Bearbeitungswerkzeugs 5 erfolgt um eine Werkzeugachse 8. Die Werkzeugachse 8 steht senkrecht auf der Vorschubachse 3.

Die Werkzeugspindel 6 ist um eine Drehachse 9 verstellbar, dargestellt durch den Pfeil 10. Weiterhin kann die Werkzeugspindel 6 entlang der Drehachse 9 entlang einer ersten Bearbeitungsrichtung, dargestellt durch den Pfeil 11, senkrecht zur Vorschubachse 3 des Werkstücks zum Werkstück 1 hin und von diesem weg bewegt werden.

Aufgrund der Möglichkeit der Verstellung um die Drehachse 9 ist das Bearbeitungswerkzeug 5 entlang einer zweiten Bearbeitungsrichtung, dargestellt durch den Pfeil 12, im wesentlichen senkrecht zur Vorschubachse 3 des Werkstücks und im wesentlichen senkrecht zur ersten Bearbeitungsrichtung 11 am Werkstück 1 entlang bewegbar.

Das Werkzeug 5 ist weiterhin um eine senkrecht zu der Vorschubachse 3 und zu der Drehachse 9 stehenden Schwenkachse 13 verschwenkbar, dargestellt durch den Pfeil 14, wodurch die erste Bearbeitungsrichtung 11 des Werkzeugs 5 in Bezug auf die Vorschubachse 3 des Werkstücks einen Winkel kleiner als 90° annehmen kann. Hierdurch lassen sich mit dem Bearbeitungswerkzeug 5 am Werkstück 1 Hinterschneidungen erzeugen.

Auf der anderen Seite der Vorschubachse 3 ist ein zweites Bearbeitungswerkzeug 15 angeordnet, welches als Schleifstift mit einer Kegelspitze und einem Spitzenradius von 0,1 bis 0,5 mm ausgebildet ist. Die Bearbeitungswerkzeuge 5, 15 weisen radiale Arbeitsflächen 16 sowie stirnseitige Arbeitsflächen 17 auf, wobei im Fall des Bearbeitungswerkzeugs 5 in Form eines Zylinderschleifers die Arbeitsfläche 17 senkrecht zur Werkzeugachse 8 ausgebildet ist, so daß am Übergang von der radialen Arbeitsfläche zur stirnseitigen Arbeitsfläche ein Winkel von 90° vorhanden ist. Bei dem zweiten Bearbeitungswerkzeug 15 ist die stirnseitige Arbeitsfläche als Kegel mit einem Kegelwinkel von 15° bis 55° ausgebildet, wobei die Spitze einen Spitzenradius von 0,1 bis 0,5 mm aufweist, so daß hier Vertiefungen mit mindestens dem Öffnungswinkel des Doppelten des Kegelwinkels hergestellt werden können.

Das zweite Bearbeitungswerkzeug 15 ist in einer Werkzeugspindel 18 gelagert und mittels eines Antriebs 19 um eine zweite Werkzeugachse 20, die senkrecht auf der Vorschubachse 3 steht, antreibbar. Die Werkzeugspindel 18 ist um eine Drehachse 21, die senkrecht auf der Vorschubachse 3 steht und zu der Werkzeugachse 20 um einen Abstand R₂ versetzt ist, verstellbar, angedeutet durch den Pfeil 22. Die Werkzeugspindel 18 und damit das zweite Bearbeitungswerkzeug 15 ist entlang der Werkzeugachse 20 und der Drehachse 21 zur Vorschubachse 3 hin bewegbar, angedeutet durch den Pfeil 23.

Schließlich kann auch die Werkzeugspindel 18 um eine Schwenkachse 24, die sowohl senkrecht auf der Vorschubachse 3 als auch auf der Werkzeugachse 8 steht, verschwenkt werden, angedeutet durch den Pfeil 25, wodurch mit dem Bearbeitungswerkzeug 15 ebenfalls Hinterschneidungen hergestellt werden können.

Für die Herstellung dreidimensionaler Hinterschneidungen kann das Werkstück 1 um die Vorschubachse 3 rotieren, dargestellt durch den Pfeil 26.

Die Werkzeuge 5, 15 sind in einer Mittellage dargestellt, bei der die Werkzeugachsen 8, 20, die Drehachsen 9, 21 und Vorschubachse 3 in einer einzigen Ebene liegen, zu der die Schwenkachsen 13, 24 senkrecht sind. Die Bearbeitungswerkzeuge 5, 15 sind nicht im Eingriff mit dem Werkstück 1.

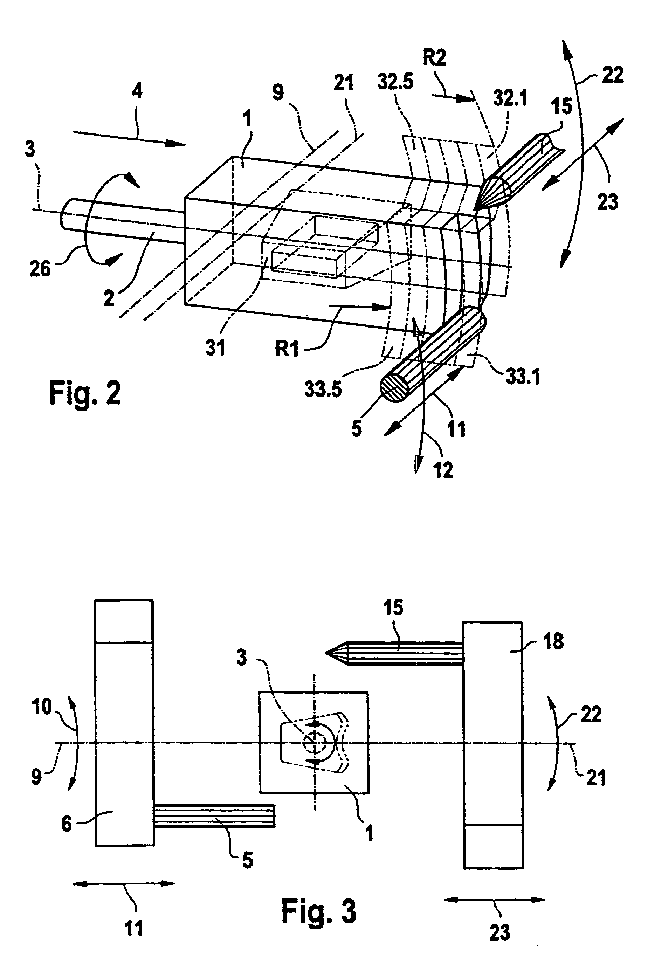

In Fig. 2 ist das Werkstück 1 mit dem daraus zu erstellenden Paßkörper 31 zusammen mit dem Halter dargestellt. Die Bearbeitung des Werkstücks 1 durch die Bearbeitungswerkzeuge 5, 15 erfolgt durch Verschieben des Werkstücks 1 entlang der Vorschubachse 3 in Richtung des Pfeils 4, wodurch sich das Werkstück 1 an den Bearbeitungswerkzeugen 5, 15 vorbeibewegt.

Die Bearbeitungswerkzeuge 5, 15 werden durch Drehung um die senkrecht zu der Vorschubachse 3 liegenden Drehachsen 9, 21 entlang nahezu senkrecht zu der Vorschubachse 3 und den Drehachsen 9, 21 ausgerichteten Bearbeitungsflächen 32, 33 bewegt. Dabei wird zunächst die dem Halter 2 abgewandte Seite des Werkstücks 1 entlang der Bearbeitungsflächen 32.1, 33.1 bearbeitet. Nach Fertigstellung der Bearbeitungsflächen 32.1., 33.1 wird das Werkstück 1 in Richtung des Pfeil 4 entlang der Vorschubachse 3 ein Stück weit verschoben, höchstens um den kleineren der beiden Durchmesser der Bearbeitungswerkzeuge 5, 15. Anschließend erfolgt die Bearbeitung des Werkstücks 1 entlang einer neuen Bearbeitungsfläche, so daß nach fünfmaligem Vorschub die Bearbeitungsfläche 32.5, 33.5 hergestellt wurde.

In Fig. 2 ist zu erkennen, daß die Drehachsen 9, 21 der Werkzeugspindeln nicht zusammenfallen. Um die Bearbeitungsflächen 32, 33 gleichwohl in etwa auf gleicher Höhe bezüglich der Vorschubachse 3 des Werkstücks zu halten, ist der Abstand der Drehachsen 9, 21 zu den Bearbeitungsflächen 32, 33 unterschiedlich. Im Ausführungsbeispiel ist der Abstand R₁ größer als der Abstand R₂, wobei durch das Auseinanderfallen der Drehachsen 9, 21 die Bearbeitungsflächen 32, 33 eng zusammenliegen.

Durch die Pfeile 11, 23 ist weiterhin angedeutet, daß die Bearbeitungswerkzeuge 5, 15 zur Vorschubachse 3 hin und von dieser weg verstellbar sind.

In Fig. 3 ist die Anfangsposition der Bearbeitungswerkzeuge 5, 15 zu Beginn eines Bearbeitungsvorgangs in Sicht auf die dem Halter gegenüberliegende Seite des Werkstücks 1 dargestellt, wobei in dem Werkstück 1 der herauszuarbeitende Paßkörper angedeutet ist. Die Bearbeitungswerkzeuge 5, 15 sind um die Drehachsen 9, 21 ausgelenkt worden, so daß die Werkzeugspindel 6 auf der linken Seite der Darstellung auf die Darstellung bezogen unten und die Werkzeugspindel 18 auf der rechten Seite der Darstellung auf die Darstellung bezogen nach oben ausgelenkt wurden. Die Bearbeitungswerkzeuge 5, 15 stehen senkrecht zu der Vorschubachse 3, die senkrecht zu der Darstellungsebene verläuft.

Die Bearbeitungswerkzeuge 5, 15 werden für die Bearbeitung gegenläufig an dem Werkstück 1 in Richtung der Pfeile 10, 22 entlang geführt, wobei die Bearbeitungswerkzeuge 5, 15 in Richtung der Pfeile 11, 23 zur Vorschubachse 3 und damit zum Werkstück 1 hin oder von dieser bzw. diesem weg bewegt werden.

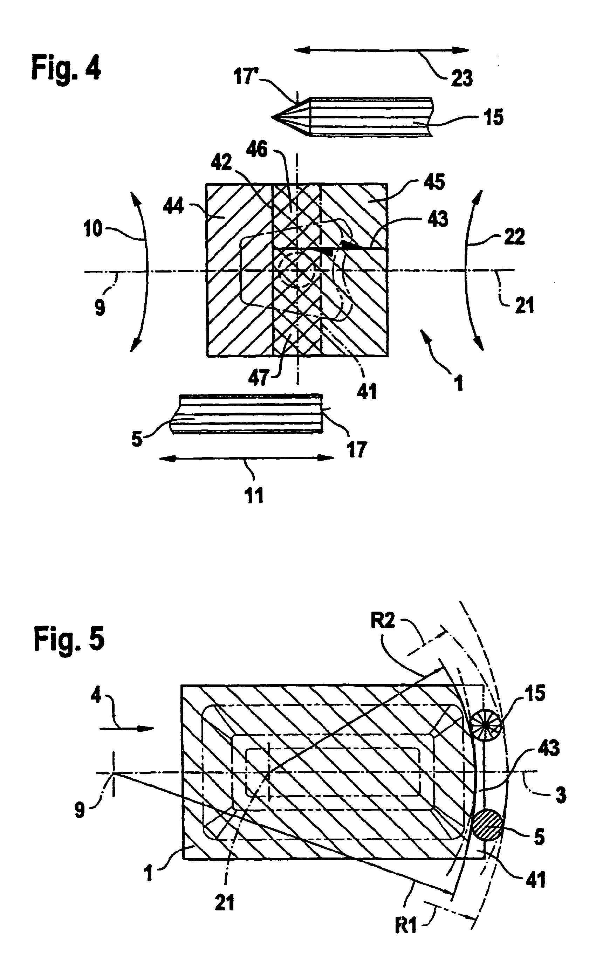

In Fig. 4 ist ein beispielhafter Bearbeitungsweg der beiden Bearbeitungswerkzeuge 5, 15 wiedergegeben. Der Weg des Bearbeitungswerkzeugs 5 ist durch die strichpunktierte Linie 41 vorgegeben, wobei die Linie 41 den Verlauf der stirnseitigen Arbeitsfläche 17 wiedergibt. Die Bewegung des Bearbeitungswerkzeugs 15 ist durch die durchgezogene Linie 42 verdeutlicht, wobei auch hier die Linie 42 die stirnseitige Arbeitsfläche 17 des zweiten Bearbeitungswerkzeugs 15 wiedergibt. Zum Herausarbeiten eines Paßkörpers aus dem Werkstück 1 ist zunächst eine Materialabtragung über die gesamte Fläche des Werkstücks 1 erforderlich. Die Materialabtragung erfolgt so, daß das Bearbeitungswerkzeug 5 links unten in der Darstellung beginnt, wohingegen das Bearbeitungswerkzeug 15 rechts oben in der Darstellung beginnt. Die Bearbeitungswerkzeuge 5, 15 bewegen sich auf ihren Bearbeitungsflächen (Fig. 2) entlang der Pfeile 10, 22 aufeinander zu, wobei in einem mittleren Bereich 43 die Bearbeitungswerkzeuge 5, 15 einander ausweichen. Das Ausweichen erfolgt so, daß über die Steuerungseinheit der Bearbeitungswerkzeuge 5, 15 eine Kollision vorab festgestellt wird, woraufhin ein Bearbeitungswerkzeug 15 in der ersten Bewegungsrichtung 23 soweit vom Werkzeug 1 entfernt wird, dargestellt durch die Linie 43 mit einem ersten Teilstück in Richtung vom Werkzeug weg und einem zweiten Teilstück in Richtung zum Werkstück hin, daß das Bearbeitungswerkzeug 5 ungehindert entlang der zweiten Bewegungsrichtung 10 am Werkstück 1 entlanggeführt werden kann. Es handelt sich hier um einen Master-Slave-Betrieb der beiden Bearbeitungswerkzeugen 5, 15, wobei das Bearbeitungswerkzeug 15 während des Zurückfahrens entlang der ersten Bewegungsrichtung 23 seine Lage bezogen auf die zweite Bewegungsrichtung beibehält. Das Bearbeitungswerkzeug 5 überstreicht demnach die Bearbeitungsfläche 44, die von der Linie 41 begrenzt ist und die durch die Schraffur von links unten nach rechts oben dargestellt ist. Das Bearbeitungswerkzeug 15 überstreicht die Bearbeitungsfläche 45, die durch die Linie 42 begrenzt wird und durch die Schraffur von links oben nach rechts unten dargestellt ist.

Aus Fig. 4 wird ersichtlich, daß bei dieser Steuerung der Bearbeitungswerkzeuge Teilbereiche 46, 47 vorhanden sind, innerhalb derer das eine Bearbeitungswerkzeug 5, 15 in die Bearbeitungsfläche des anderen Bearbeitungswerkzeugs 15, 5 eindringt.

In Fig. 5 werden die geometrischen Verhältnisse, die für den Verlauf der Bearbeitungsflächen maßgeblich sind, nochmals verdeutlicht. Ausgehend von dem sich entlang der Vorschubachse 3 erstreckende Werkstück 1, aus dem der Paßkörper herausgearbeitet werden muß, fahren die Bearbeitungswerkzeuge 5, 15 auf einer Kreisbahn mit dem Radius R₁ bzw. R₂ und die auf den Drehachsen 9 bzw. 21 liegenden Mittelpunkte an dem Werkstück 1 in der zweiten Bearbeitungsrichtung entlang und bewirken einen Materialabtrag. In dem zentralen Bereich 43 erfolgte noch kein Materialabtrag, hier werden sich die Bearbeitungswerkzeuge 5, 15, wie bezüglich Fig. 4 erläutert, mit weiterem Zustellen in Richtung der zweiten Bearbeitungsrichtung ausweichen.

Unterhalb des Bearbeitungswerkzeugs 5 erkennt man den Verlauf der Linie 41, was bedeutet, daß dort das noch tiefer in die Darstellungsebene hineinversetzte Material des Werkstücks 1 stehengeblieben ist und zu einem späteren Zeitpunkt von dem Bearbeitungswerkzeug 15 entfernt wird. Obwohl sich die Bearbeitungswerkzeuge 5, 15 auf Kreisbahnen mit unterschiedlichem Radius R₁, R₂ bewegen, sind die Bearbeitungsflächen entlang dieser Kreisbahnen im wesentlichen auf gleicher Höhe bezüglich der Vorschubachse 3 des Werkstücks und im wesentlichen senkrecht zu der Vorschubachse 3. Selbstverständlich ist es möglich, anstelle einer Kreisbewegung um die Drehachsen 9, 21 eine rein lineare Bewegung der Bearbeitungswerkzeuge 5, 15 vorzusehen, was allerdings einen etwas höheren apparativen Aufwand erfordert. Gleichwohl kann die erfindungsgemäße Lehre auch durch linear bewegte Bearbeitungswerkzeuge verwirklicht werden.

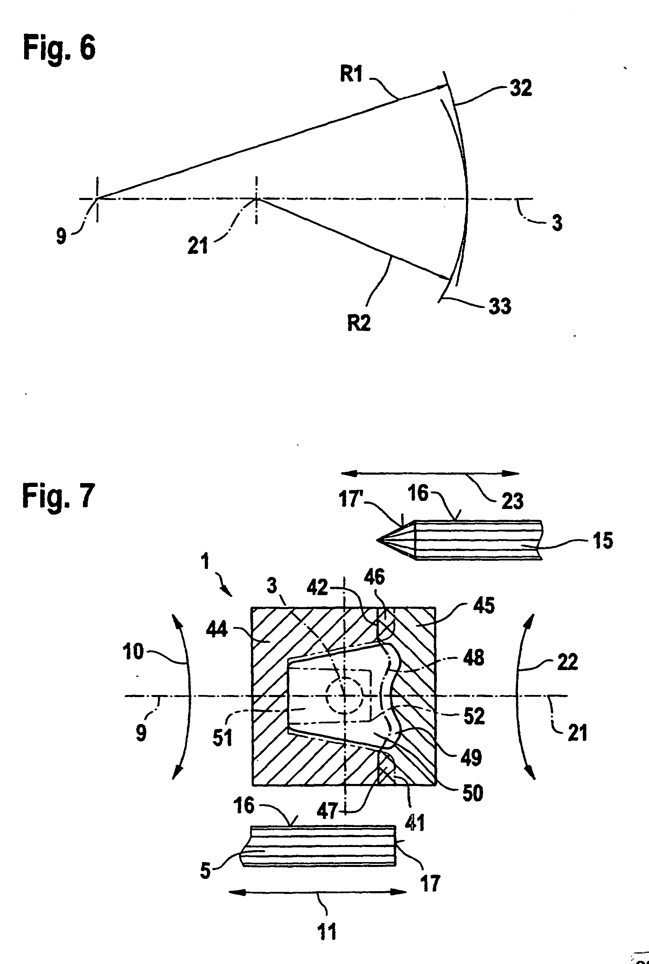

In Fig. 6 sind die auf einer Kreisbahn mit dem Radius R₁ bzw. R₂ verlaufenden Bearbeitungsflächen 32, 33 schematisch dargestellt, wobei zu erkennen ist, daß im Bereich der Vorschubachse 3 die Bearbeitungsflächen 32 und 33 ineinander übergehen. Betrachtet man die Bearbeitungsflächen als Kreisbogen, so berühren sich die beiden Kreisbogen im Schnittpunkt mit der Vorschubachse 3.

In Fig. 7 ist der Verlauf der Bearbeitung in einen Bereich des Werkstücks 1 gezeigt, in dem der Paßkörper zum Teil bereits aus dem Werkstück 1 herausgearbeitet wurde, so daß die Bearbeitungswerkzeuge 5, 15 die Konturen des Paßkörpers erzeugen müssen. Durch die strichpunktierte Linie 41 wird wiederum der Arbeitsbereich des Bearbeitungswerkzeugs 5 angegeben, wobei das Bearbeitungswerkzeug 5 in Richtung des Pfeils 11 zum Werkstück hin bzw. vom Werkstück weg bewegt wird und in Richtung des Pfeils 10 am Werkstück 1 entlang bewegt wird. Das Bearbeitungswerkzeug 15 wird in Richtung des Pfeils 23 zum Werkstück hin bzw. von diesem weg bewegt und in Richtung des Pfeils 22 am Werkstück 1 entlang bewegt. Die Bearbeitungswerkzeuge 5, 15 überkreuzen sich dabei an einer Äquatorlinie 48, die durch die Aneinanderreihung der Kreuzungspunkte in jeder Bearbeitungsebene entsteht. Die Äquatorlinie 48 teilt den Paßkörper in einen oberen Teil 49 und einen unteren Teil 50, wobei der obere Teil 49 ausschließlich von dem Bearbeitungswerkzeug 15 und der untere Teil 50 ausschließlich von dem Bearbeitungswerkzeug 5 bearbeitet wurde.

Die für Zahnrestaurationen typischen Geometrien bevorzugen für die Gestaltung des unteren Teils 50 den Einsatz eines Zylinderschleifers mit einer stirnseitigen Arbeitsfläche 17, die senkrecht zu der radialen Arbeitsfläche 16 angeordnet ist, so daß in Kavitäten 51 angeordnete Ecken 52 vollständig ausgearbeitet werden können.

Zur Gestaltung des oberen Teils wird ein Bearbeitungswerkzeug mit einer stirnseitigen Arbeitsfläche 17' in Form eines Kegels verwendet, wobei die Kegelspitze einen Radius von 0,1 bis 0,5 mm aufweist. Der Kegelwinkel, d. h. der Winkel zwischen der Mantellinie des Kegels und der Werkzeugachse beträgt zwischen 15° und 55°, so daß der doppelte Kegelwinkel, auch als Öffnungswinkel bezeichnet, zwischen 30° und 110° liegt. Mit einer derartigen Schleifgeometrie können die zur Erstellung von Zahnrestaurationen erforderlichen Oberflächenverläufe und hier insbesondere die Fissuren in hinreichender Feinheit dargestellt werden. Weiterhin können Rundungen aufgrund der Kegelspitze dem idealen Verlauf besser angenähert werden.

Dabei ist es in der Regel nicht erforderlich, das Werkzeug 1 um die Vorschubachse 3 zu drehen, um die Fissuren zu erzeugen. Das Werkstück 1 kann während der gesamten Bearbeitung in der einmal eingenommenen Lage verbleiben und wird lediglich in Richtung der Vorschubachse 3 bewegt.

Auch in diesem Bearbeitungsstadium überlappen sich die Bearbeitungsflächen 44, 45 in den Bereichen 46, 47 bzw. dringt ein Bearbeitungswerkzeug in die Bearbeitungsfläche des anderen Bearbeitungswerkzeugs ein.

Die Steuerung der Bearbeitungswerkzeuge 5, 15 ist so, daß am Ende jeder Bearbeitungsfläche das schnellere Bearbeitungswerkzeug auf das langsamere Bearbeitungswerkzeug wartet, bevor die nächste Bearbeitungsfläche zur Bearbeitung kommt.

## Patentansprüche

1. Vorrichtung zur Erstellung von medizinischen Paßkörpern, insbesondere von Zahnrestaurationen, mit einem in axialer Richtung entlang einer Vorschubachse (3) verstellbaren Werkstück (1), mit einem ersten Bearbeitungswerkzeug (5) auf einer Seite der Vorschubachse (3) und mit einem gleichzeitig in Betrieb befindlichen zweiten Bearbeitungswerkzeug (15) auf der anderen Seite des Werkstücks (1), **dadurch gekennzeichnet, daß** die Bearbeitungswerkzeuge (5, 15), als in Rotation versetzbare Stifte mit radialen und stirnseitigen Arbeitsflächen (16, 17, 17') ausgebildet sind und daß die Bearbeitungswerkzeuge (5, 15) während der Bearbeitung des Werkstücks (1) in etwa auf gleicher Höhe bezüglich der Vorschubachse (3) des Werkstücks angeordnet sind, so daß sie entlang eng zusammenliegender Bearbeitungsflächen (32, 33; 44, 45) arbeiten.

2. Vorrichtung nach Anspruch 1, **dadurch gekennzeichnet, daß** das Werkstück (1) in axialer Richtung zustellbar ist.

3. Vorrichtung nach Anspruch 1 oder 2, **dadurch gekennzeichnet, daß** die Bearbeitungswerkzeuge (5, 15) entlang einer ersten Bearbeitungsrichtung senkrecht zur Vorschubachse (3) des Werkstücks zum Werkstück (1) hin und von diesem weg bewegbar sind.

4. Vorrichtung nach Anspruch 3, **dadurch gekennzeichnet, daß** die Bearbeitungswerkzeuge (5, 15) entlang einer zweiten Bearbeitungsrichtung (12) im wesentlichen senkrecht zur Vorschubachse (3) des Werkstücks und im wesentlichen senkrecht zur ersten Bearbeitungsrichtung (11) am Werkstück (1) entlang bewegbar sind.

5. Vorrichtung nach einem der Ansprüche 1 bis 4, **dadurch gekennzeichnet, daß** das erste und das zweite Bearbeitungswerkzeug (5, 15) getrennt angetrieben sind.

6. Vorrichtung nach einem der Ansprüche 1 bis 5, **dadurch gekennzeichnet, daß** Steuermittel vorgesehen sind, welche die Bewegung der Bearbeitungswerkzeuge (5, 15) im Sinne einer simultanen Bearbeitung des Werkstücks (1) entsprechend vorgegebener Konturendaten steuern.

7. Vorrichtung nach einem der Ansprüche 1 bis 6, **dadurch gekennzeichnet, daß** die Bearbeitungsflächen im wesentlichen senkrecht zur Vorschubachse (3) sind.

8. Vorrichtung nach einem der Ansprüche 1 bis 7, **dadurch gekennzeichnet, daß** die Bearbeitungsflächen höchstens einen Werkzeugdurchmesser auseinander liegen.

9. Vorrichtung nach einem der Ansprüche 1 bis 8, **dadurch gekennzeichnet, daß** das Werkstück (1) um die Vorschubachse (3) drehbar ist.

10. Vorrichtung nach einem der Ansprüche 1 bis 9, **dadurch gekennzeichnet, daß** das erste und/oder das zweite Bearbeitungswerkzeug (5, 15) um eine parallel zu der Werkzeugachse (8, 20) angeordnete Drehachse (9, 21) verstellbar ist.

11. Vorrichtung nach Anspruch 10, **dadurch gekennzeichnet,, daß** die Bearbeitungswerkzeuge bezüglich der Drehachse (9, 21) so beabstandet sind, daß sich die Bearbeitungsflächen berühren und/oder zumindest teilweise überschneiden.

12. Vorrichtung nach Anspruch 10 oder 11, **dadurch gekennzeichnet, daß** Abstand der beiden Werkzeuge (5, 15) zu den jeweiligen Drehachsen (9, 21) gleich groß ist..

13. Vorrichtung nach einem der Ansprüche 1 bis 12, **dadurch gekennzeichnet, daß** ein Bearbeitungswerkzeug (5) ein Zylinderschleifer und das andere Bearbeitungswerkzeug (15) ein Schleifstift mit sich zur Spitze hin verjüngender Form ist.

14. Vorrichtung nach Anspruch 13, **dadurch gekennzeichnet, daß** der Schleifstift (15) mit sich zur Spitze (17) hin verjüngender Form einen Spitzenradius von 0,1 bis 0,5 mm und einen Kegelwinkel von 15° bis 55° aufweist.

15. Vorrichtung nach einem der Ansprüche 1 bis 14, **dadurch gekennzeichnet, daß** mindestens ein Werkzeug (5) so um eine Schwenkachse verschwenkbar ist, daß die erste Bearbeitungsrichtung (11) des Werkzeugs (5) in Bezug auf die Vorschubachse (3) des Werkstücks (1) in einem Winkel kleiner als 90° angeordnet ist.

16. Verfahren zur Erstellung von medizinischen Paßkörpern, insbesondere von Zahnrestaurationen, unter Verwendung einer Bearbeitungsmaschine mit mindestens zwei gleichzeitig in Betrieb befindlichen Bearbeitungswerkzeugen (5, 15), wobei das Werkstück (1) während der Bearbeitung in axialer Richtung entlang einer Vorschubachse (3) an den zu beiden. Seiten des Werkstücks (1) angeordneten Werkzeugen (5, 15) vorbeigeführt wird, **dadurch gekennzeichnet, daß** die Bearbeitungswerkzeuge (5, 15) als in Rotation versetzbare Stifte mit radialen und stirnseitigen Arbeitsflächen (16, 17, 17') ausgebildet sind und ein radialer und/oder stirnseitiger Materialabtrag erfolgt und daß die Bearbeitungswerkzeuge (5, 15) in eng zusammenliegenden Bearbeitungsflächen (32, 33) am Werkstück geführt sind und folglich in etwa auf gleicher Höhe, bezogen auf die Vorschubachse (3), arbeiten.

17. Verfahren nach Anspruch 16, **dadurch gekennzeichnet, daß** das Werkstück (1) während der Bearbeitung in axialer Richtung an den Werkzeugen (5, 15) entlang geführt wird und daß zumindest ein Werkzeug (5, 15) in einer ersten Bearbeitungsrichtung (11, 23), die senkrecht zur Vorschubachse (3) des Werkstücks ist, zum Werkstück (1) hin und von diesem weg bewegt wird.

18. Verfahren nach Anspruch 16 oder 17, **dadurch gekennzeichnet, daß** mindestens ein Bearbeitungswerkzeug (5, 15) entlang einer zweiten Bearbeitungsrichtung (10, 22) im wesentlichen senkrecht zur Vorschubachse (3) des Werkstücks und im wesentlichen senkrecht zur ersten Bearbeitungsrichtung (11, 23) am Werkstück (1) entlang bewegbar ist.

19. Verfahren nach einem der Ansprüche 16 bis 18, **dadurch gekennzeichnet, daß** das Werkstück (1) in axialer Richtung zugestellt wird und daß das Werkstück (1) zur Erzeugung von Hinterschneidungen um die Vorschubachse (3) gedreht wird.

20. Verfahren nach einem der Ansprüche 16 bis 19, **dadurch gekennzeichnet, daß** ein Bearbeitungswerkzeug (5, 15) zumindest zeitweise in die Bearbeitungsfläche (32, 33; 44, 45) des anderen Bearbeitungswerkzeugs (15, 5) eindringt.

21. Verfahren nach Anspruch 20, **dadurch gekennzeichnet, daß** die Bearbeitungswerkzeuge (5, 15) in dem Bereich des Werkstücks, in dem der Paßkörper erzeugt wird, gegenläufig arbeiten.

22. Verfahren nach einem der Ansprüche 16 bis 21, **dadurch gekennzeichnet, daß** zur Herstellung von Hinterschneidungen in der Oberfläche des Paßkörpers mindestens ein Bearbeitungswerkzeug (5, 15) so um eine Schwenkachse (13, 24) verschwenkbar ist, daß die erste Bearbeitungsrichtung (11, 23) des Werkzeugs in Bezug auf die Vorschubachse (3) des Werkstücks in einem Winkel kleiner als 90° angeordnet ist.

23. Verfahren nach einem der Ansprüche 16 bis 22, **dadurch gekennzeichnet, daß** die Bewegungen der beiden Bearbeitungswerkzeuge (5, 15) am Ende jeder Bearbeitungsfläche (32, 33; 44, 45) synchronisiert werden, indem jedes Bearbeitungswerkzeug (5, 15) die für ihn bestimmte Bahn abfährt und das schnellere Bearbeitungswerkzeug (5, 15) auf das langsamere Bearbeitungswerkzeug (5, 15) wartet.

24. Verfahren nach einem der Ansprüche 16 bis 23, **dadurch gekennzeichnet, daß** der zu erstellende Paßkörper in einen durch eine Äquatorlinie (48) abgrenzbaren oberen Teil (49) und einen unteren Teil aufteilbar ist, wobei das eine Bearbeitungswerkzeug (15) den oberen Teil (49) und das andere Bearbeitungswerkzeug (5) den gegenüberliegenden unteren Teil (50) des Paßkörpers bearbeitet.

25. Verfahren nach einem der Ansprüche 16 bis 24, **dadurch gekennzeichnet, daß** zur Bearbeitung des unteren Teils (50) ein Zylinderschleifer und zur Bearbeitung des oberen Teils (49) ein Schleifstift mit sich zur Spitze hin verjüngender Form verwendet wird.

## Claims

1. Device for production of medical fittings, in particular dental restorations, with a workpiece (1) which can be moved in the axial direction along a feed axis (3), with a first machining tool (5) on one side of the feed axis (3), and with a second machining tool (15) operating simultaneously on the other side of the workpiece (1), **characterized in that** the machining tools (5, 15) are designed as rods which can be set in rotation and have radial and terminal working faces (16, 17, 17'), and **in that** the machining tools (5, 15), during machining of the workpiece (1), are arranged at approximately the same height relative to the feed axis (3) of the workpiece, so that they work along closely adjacent machining areas (32, 33; 44, 45).

2. Device according to Claim 1, **characterized in that** the workpiece (1) can be advanced in the axial direction.

3. Device according to Claim 1 or 2, **characterized in that** the machining tools (5, 15) can be moved toward and away from the workpiece (1), along a first machining direction perpendicular to the feed axis (3) of the workpiece.

4. Device according to Claim 3, **characterized in that** the machining tools (5, 15) can be moved along the workpiece (1) along a second machining direction (12) essentially perpendicular to the feed axis (3) of the workpiece and essentially perpendicular to the first machining direction (11).

5. Device according to one of Claims 1 to 4, **characterized in that** the first and second machining tools (5, 15) are driven separately.

6. Device according to one of Claims 1 to 5, **characterized in that** control means are provided which control the movement of the machining tools (5, 15) for simultaneous machining of the workpiece (1) according to predetermined contour data.

7. Device according to one of Claims 1 to 6, **characterized in that** the machining areas are essentially perpendicular to the feed axis (3).

8. Device according to one of Claims 1 to 7, **characterized in that** the machining areas lie at most one tool diameter from each other.

9. Device according to one of Claims 1 to 8, **characterized in that** the workpiece (1) can be rotated about the feed axis (3).

10. Device according to one of Claims 1 to 9, **characterized in that** the first and/or second machining tool (5, 15) can be moved about an axis of rotation (9, 21) arranged parallel to the tool axis (8, 20).

11. Device according to Claim 10, **characterized in that** the machining tools are spaced apart relative to the axis of rotation (9, 21) in such a way that the machining areas touch and/or at least partially overlap.

12. Device according to Claim 10 or 11, **characterized in that** the distances of the two tools (5, 15) from the respective axes of rotation (9, 21) are identical.

13. Device according to one of Claims 1 to 12, **characterized in that** one machining tool (5) is a cylinder grinder and the other machining tool (15) is a grinder rod tapering toward a point.

14. Device according to Claim 13, **characterized in that** the grinder rod (15), tapering toward a point (17), has a point radius of 0.1 to 0.5 mm and a cone angle of 15° to 55°.

15. Device according to one of Claims 1 to 14, **characterized in that** at least one tool (5) can be swivelled about a swivel axis in such a way that the first machining direction (11) of the tool (5) is arranged at an angle of less than 90° relative to the feed axis (3) of the workpiece (1).

16. Method for production of medical fittings, in particular dental restorations, using a machining device with at least two simultaneously operating machining tools (5, 15), the workpiece (1), during machining, being guided in the axial direction along a feed axis (3) past the tools (5, 15) arranged to either side of the workpiece (1), **characterized in that** the machining tools (5, 15) are designed as rods which can be set in rotation and have radial and terminal working faces (16, 17, 17') effecting radial and/or terminal removal of material, and **in that** the machining tools (5, 15) are guided in closely adjacent machining areas (32, 33) on the workpiece and consequently work at approximately the same height relative to the feed axis (3) .

17. Method according to Claim 16, **characterized in that** the workpiece (1), during machining, is guided in the axial direction past the tools (5, 15), and **in that** at least one tool (5, 15) is moved toward and away from the workpiece (1) in a first machining direction (11, 23) which is perpendicular to the feed axis (3) of the workpiece.

18. Method according to Claim 16 or 17, **characterized in that** at least one machining tool (5, 15) can be moved along the workpiece (1) along a second machining direction (10, 22) essentially perpendicular to the feed axis (3) of the workpiece and essentially perpendicular to the first machining direction (11, 23).

19. Method according to one of Claims 16 to 18, **characterized in that** the workpiece (1) is advanced in the axial direction, and **in that** the workpiece (1) is rotated about the feed axis (3) to form undercuts.

20. Method according to one of Claims 16 to 19, **characterized in that** one machining tool (5, 15) impinges at least intermittently into the machining area (32, 33; 44, 45) of the other machining tool (15, 5).

21. Method according to Claim 20, **characterized in that** the machining tools (5, 15) work in opposite directions in the area of the workpiece in which the fitting is produced.

22. Method according to one of Claims 16 to 21, **characterized in that**, in order to form undercuts in the surface of the fitting, at least one machining tool (5, 15) can be swivelled about a swivel axis (13, 24) in such a way that the first machining direction (11, 23) of the tool is arranged at an angle of less than 90° relative to the feed axis (3) of the workpiece.

23. Method according to one of Claims 16 to 22, **characterized in that** the movements of the two machining tools (5, 15) are synchronized at the end of each machining area (32, 33; 44, 45), by each machining tool (5, 15) leaving the trajectory assigned to it and by the faster machining tool (5, 15) waiting for the slower machining tool (5, 15).

24. Method according to one of Claims 16 to 23, **characterized in that** the fitting to be produced can be divided into an upper part (49) and a lower part delimited by an equator line (48), one machining tool (15) machining the upper part (49), and the other machining tool (5) machining the opposite lower part (50) of the fitting.

25. Method according to one of Claims 16 to 24, **characterized in that** a cylinder grinder is used to machine the lower part (50), and a grinder rod tapering toward a point is used to machine the upper part (49).

## Revendications

1. Dispositif d'élaboration de prothèses médicales, en particulier de restaurations dentaires, comprenant une pièce (1) déplaçable dans la direction axiale le long d'un axe d'avancement (3), un premier outil d'usinage (5) sur un côté de l'axe d'avancement (3) et un deuxième outil d'usinage se trouvant en même temps en service (15) sur l'autre côté de la pièce (1), **caractérisé en ce que** les outils d'usinage (5, 15) se présentent sous la forme de tiges déplaçables en rotation avec des surfaces de travail radiale et frontale (16, 17, 17') et **en ce que** les outils d'usinage (5, 15) sont aménagés, pendant l'usinage de la pièce (1), approximativement à la même hauteur par rapport à l'axe d'avancement (3) de la pièce de sorte qu'ils opèrent le long de surfaces d'usinage très proches (32, 33; 44, 45).

2. Dispositif selon la revendication 1, **caractérisé en ce que** la pièce (1) est déplaçable dans la direction axiale.

3. Dispositif selon la revendication 1 ou 2, **caractérisé en ce que** les outils d'usinage (5, 15) sont déplaçables le long d'une première direction d'usinage, perpendiculairement à l'axe d'avancement (3) de la pièce, vers la pièce (1) et en s'éloignant d'elle.

4. Dispositif selon la revendication 3, **caractérisé en ce que** les outils d'usinage (5, 15) sont déplaçables le long d'un second dispositif d'usinage (12) sensiblement perpendiculaire à l'axe d'avancement (3) de la pièce et sensiblement perpendiculaire au premier dispositif d'usinage (11) le long de la pièce (1).

5. Dispositif selon l'une quelconque des revendications 1 à 4, **caractérisé en ce que** les premier et second outils d'usinage (5, 15) sont entraînés séparément.

6. Dispositif selon l'une quelconque des revendications 1 à 5, **caractérisé en ce qu'**il est prévu des moyens de commande qui commandent le déplacement des outils d'usinage (5, 15) dans le sens d'un usinage simultané de la pièce (1) en fonction de données de contour prescrites.

7. Dispositif selon l'une quelconque des revendications 1 à 6, **caractérisé en ce que** les surfaces d'usinage sont sensiblement perpendiculaires à l'axe d'avancement (3).

8. Dispositif selon l'une quelconque des revendications 1 à 7, **caractérisé en ce que** les surfaces d'usinage sont distantes au maximum d'un diamètre d'outil d'usinage.

9. Dispositif selon l'une quelconque des revendications 1 à 8, **caractérisé en ce que** la pièce (1) peut être soumise à une rotation autour de l'axe d'avancement (3).

10. Dispositif selon l'une quelconque des revendications 1 à 9, **caractérisé en ce que** le premier et/ou le second outil d'usinage (5, 15) peut être déplacé autour d'un axe de rotation (9, 21) disposé parallèlement à l'axe des outils d'usinage (8, 20).

11. Dispositif selon la revendication 10, **caractérisé en ce que** les outils d'usinage sont espacés par rapport à l'axe de rotation (9, 21) de manière que les surfaces d'usinage se touchent et/ou se chevauchent au moins partiellement.

12. Dispositif selon la revendication 10 ou 11, **caractérisé en ce que** la distance des deux outils d'usinage (5, 15) par rapport aux axes de rotation respectifs (9, 21) est identique.

13. Procédé suivant l'une quelconque des revendications 1 à 12, **caractérisé en ce qu'**un outil d'usinage (5) est une ponceuse à cylindres et l'autre outil d'usinage (15) est une meule sur tige dont la forme s'amincit vers la pointe.

14. Dispositif selon la revendication 13, **caractérisé en ce que** la meule sur tige (15) ayant une forme s'amincissant vers la pointe (17) présente un rayon de pointe de 0,1 à 0,5 mm et un angle de cône de 15° à 55°.

15. Dispositif selon l'une quelconque des revendications 1 à 14, **caractérisé en ce que** l'on peut faire pivoter au moins un outil d'usinage (5) autour d'un axe pivot de manière que la première direction d'usinage (11) de l'outil d'usinage (5) soit agencée selon un angle inférieur à 90° par rapport à l'axe d'avancement (3) de la pièce (1).

16. Procédé d'élaboration de prothèses médicales, en particulier de restaurations dentaires, en utilisant une machine d'usinage comprenant au moins deux outils d'usinage en service simultanément (5, 15), la pièce (1) étant déplacée pendant l'usinage dans la direction axiale le long d'un axe d'avancement (3) entre les outils (5, 15) disposés des deux côtés de la pièce (1), **caractérisé en ce que** les outils d'usinage (5, 15) se présentent sous la forme de tiges déplaçables en rotation avec des surfaces de travail radiale et frontale (16, 17, 17') et **en ce qu'**il se produit un enlèvement de matériau radial et/ou frontal et que les outils d'usinage (5, 15) soient guidés sur la pièce dans des surfaces d'usinage très proches (32, 33) et qu'en conséquence ils fonctionnent à une hauteur approximativement identique, par rapport à l'axe d'avancement (3).

17. Procédé selon la revendication 16, **caractérisé en ce que** la pièce (1) est guidée pendant l'usinage dans la direction axiale le long des outils d'usinage (5, 15) et **en ce que** l'on déplace au moins un outil d'usinage (5, 15) dans une première direction d'usinage (11, 23) qui est perpendiculaire à l'axe d'avancement (3) de la pièce vers la pièce (1) et en sens inverse.

18. Procédé selon la revendication 16 ou 17, **caractérisé en ce qu'**au moins un outil d'usinage (5, 15) est déplaçable le long d'une seconde direction d'usinage (10, 22) sensiblement perpendiculaire à l'axe d'avancement (3) de la pièce et sensiblement perpendiculaire à la première direction d'usinage (11, 23) le long de la pièce (1).

19. Procédé selon l'une quelconque des revendications 16 à 18, **caractérisé en ce que** la pièce (1) est déplacée dans la direction axiale et **en ce que** l'on fait tourner la pièce (1) autour de l'axe d'avancement (3) pour produire des contre-dépouilles.

20. Procédé suivant l'une quelconque des revendications 16 à 19, **caractérisé en ce qu'**un outil d'usinage (5, 15) pénètre au moins temporairement dans la surface d'usinage (32, 33; 44, 45) de l'autre outil d'usinage (15, 5).

21. Procédé selon la revendication 20, **caractérisé en ce que** les outils d'usinage (5, 15) fonctionnent en sens contraire dans la zone de la pièce dans laquelle la prothèse est produite.

22. Procédé selon l'une quelconque des revendications 16 à 21, **caractérisé en ce que**, pour produire des contre-dépouilles dans la surface de la prothèse, au moins un outil d'usinage (5, 15) peut pivoter autour d'un axe pivot (13, 24) de manière que la première direction d'usinage (11, 23) de la pièce soit agencée par rapport à l'axe d'avancement (3) de la pièce sous un angle inférieur à 90°.

23. Procédé selon l'une quelconque des revendications 16 à 22, **caractérisé en ce que** les déplacements des deux outils d'usinage (5, 15) à l'extrémité de chaque surface d'usinage (32, 33; 44, 45) sont synchronisés, chaque outil d'usinage (5, 15) parcourant le trajet qu'on lui a déterminé et l'outil d'usinage le plus rapide (5, 15) attend l'outil d'usinage plus lent (5, 15).

24. Procédé selon l'une quelconque des revendications 16 à 23, **caractérisé en ce que** la prothèse à élaborer peut être partagée en une partie supérieure (49) délimitable par une ligne équatoriale (48) et une partie inférieure, un des outils d'usinage (15) usinant la partie supérieure (49) et l'autre outil d'usinage (5) usinant la partie inférieure opposée (50) de la prothèse.

25. Procédé selon l'une quelconque des revendications 16 à 24, **caractérisé en ce que**, pour usiner la partie inférieure (50), on utilise une ponceuse à cylindres et, pour usiner la partie supérieure (49), une meuleuse à tige dont la forme s'amincit vers la pointe.
